# EUROPÄISCHE PATENTSCHRIFT

(11) **EP 1 681 184 B1**
(45) Veröffentlichungstag und Bekanntmachung des Hinweises auf die Patenterteilung: **26.05.2010**
(21) Anmeldenummer: 06000370.4
(22) Anmeldetag: 10.01.2006
(51) Int. Cl.: B60G 17/02, B60G 15/06, F16F 15/02, F16F 9/38, H02K 7/06

(54) **Federträger mit einem höhenverstellbaren Federteller**
Spring support with a height adjustable spring plate
Support de ressort pourvu d'une coupelle de ressort réglable en hauteur

(30) Priorität: 14.01.2005 DE 102005001740
(43) Veröffentlichungstag der Anmeldung: 19.07.2006
(73) Patentinhaber: ZF Friedrichshafen AG, 88046 Friedrichshafen (DE); VOLKSWAGEN AG, 38436 Wolfsburg (DE)
(72) Erfinder: Münster, Martin, 88046 Friedrichshafen (DE); Mair, Ulrich, 88046 Friedrichshafen (DE); Hippe Marko, 38536 Meinersen (DE); Splittstösser Jörg, 30163 Hannover (DE)

(56) Entgegenhaltungen:
- WO-A-02/055326
- DE-A1- 10 122 542
- DE-B3- 10 255 764

## Beschreibung

Die Erfindung betrifft ein Federbein mit einem höhenverstellbaren Federteller gemäß dem Oberbegriff von Patentanspruch 1.

Aus der DE 101 22 542 A1 ist ein Federbein mit einem oberen höhenverstellbaren Federteller für ein Kraftfahrzeug bekannt. Ein E-Motor treibt eine Gewindespindel an, wobei die Drehbewegung über eine Gewindemutter in eine translatorische Verstellbewegung des Federtellers umgesetzt wird. Bei einem leistungsfähigen System soll durch eine Verstellung des Federtellers eine Fahrzeugaufbauhorizontierung erreicht werden. Entsprechend schnell muss die Gewindemutter bewegt werden, wobei jedoch die Massenträgheit einen gewissen Nachlauf der Gewindemutter verursachen kann. Es muss berücksichtigt werden, dass die Gewindemutter in den Extremlagen des Federtellers an einem anderen Bauteil anschlagen könnte. Um diesen Betriebszustand zu vermeiden, verfügt der Schwingungsdämpfer über einen Sensor, der stets die Stellung der Gewindemutter erfasst. Diese Ausgestaltung einer Sicherung ist wegen der Verkabelung des Sensors aufwändig und insgesamt teuer.

In der gattungsbildenden DE 102 55 764 B3 ist ein verstellbarer Schwingungsdämpfer gleichen Bautyps mit elastischen Axialanschlägen an der Ober- und Unterseite der Gewindemutter versehen, die in den Extremlagen der Gewindemutter einen Kontakt mit benachbarten Bauteilen abfedern sollen. Der Axialanschlag auf der Oberseite kann in der oberen Extremlage der Gewindemutter mit der Unterseite des topfförmigen Rotors in Kontakt treten. Bei der Drehbewegung des Rotors wird der Axialanschlag gestaucht, so dass die Vorspannung innerhalb des Axialanschlags ein Verklemmen der Gewindemutter auf der Gewindespindel bewirken kann.

Aufgabe der Vorliegenden Erfindung ist es, einen Endanschlag für die Gewindemutter zu realisieren, bei das aus dem Stand der Technik bekannte Problem der Verklemmung der Gewindemutter behoben ist.

Erfindungsgemäß wird die Aufgabe durch gelöst, das Gehäuse des Aktuators eine Prallscheibe aufweist, an der der Axialanschlag zur Anlage kommen kann.

Der große Vorteil der Erfindung besteht darin, dass an dem Endanschlag keine rotatorische Relativbewegung stattfindet, die eine Klemmwirkung auf die Gewindespindel ausüben kann. Dadurch nutzt sich der Endanschlag auch praktisch nicht ab.

In weiterer vorteilhafter Ausgestaltung der Erfindung ist der Axialanschlag bezogen auf den verstellbaren Federteller auf seiner Rückseite ausgeführt. Es liegt ein vergleichsweise großer Tragdurchmesser vor, der einen Schiefstand des Federtellers wirksam verhindert.

Damit keine nennenswerten Biegekräfte in den Federteller eingeleitet werden, ist der Axialanschlag im Bereich des Windungsdurchmessers der Feder ausgeführt.

Ggf. ist der Axialanschlag mit einem Elastomerkörper bestückt, um Anschlaggeräusche zu vermeiden.

Bei einer möglichen Ausführungsform wird das Federbein von einem elastischen Schutzbalg eingehüllt, der an der Baueinheit Gewindemutter-Federteller endseitig befestigt ist und im gestauchten Zustand einen weiteren Anschlag bildet.

Damit der Schutzbalg in seiner Funktion als Anschlag nicht auf Blocklänge gestaucht wird, ist der als weiterer Anschlag wirkende Schutzbalg dem Axialanschlag funktional parallel geschaltet.

Dabei weist der Federteller einen hülsenförmigen Abschnitt auf, der einerseits den Axialanschlag trägt und in einem axialen Abstand eine Befestigungsstelle für den Schutzbalg aufweist. Insbesondere dann, wenn der hülsenförmige Abschnitt schräg zu dem Schutzbalg verläuft und mit der Prallscheibe einen Ringraum begrenzt, kann der gestauchte Schutzbalg dauerhaft schadensfrei aufgenommen werden.

Anhand der folgenden Figurenbeschreibung soll die Erfindung näher erläutert werden.

### Es zeigt:

- Fig. 1: Federbein mit einem Federteller in einer unteren Endstellung
- Fig. 2: Federbein mit dem Federteller in einer oberen Endstellung

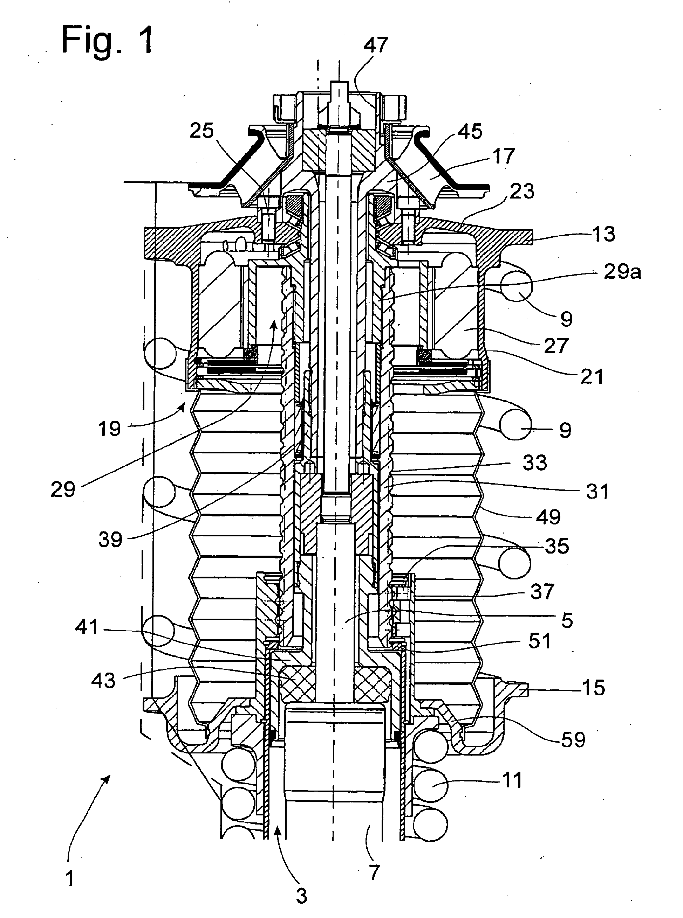

Die Figur 1 zeigt einen oberen Abschnitt eines Federbeins 1, das beispielsweise zwischen einer nichtdargestellten Fahrzeugachse und einem Fahrzeugaufbau angeordnet ist. Ein an sich bekannter Schwingungsdämpfer 3, der eine axial bewegliche Kolbenstange 5 in einem Zylinder 7 umfasst, wird von einer ersten und einer zweiten Feder 9; 11 eingehüllt. Die erste Feder 9 ist zwischen einem ersten Federteller 13 und einem zweiten Federteller 15 verspannt. Die zweite Feder 11 liegt an der Unterseite des zweiten Federtellers 15 und einem nicht dargestellten dritten Federteller an, der optional an dem Zylinder 7 oder einem Achsteil der Fahrzeugachse befestigt ist. Der obere Federteller 13 ist über ein kardanisch bewegliches Kopflager 17 mit dem Fahrzeugaufbau verbunden. An diesem Kopflager ist ebenfalls ein Aktuator 19 in der Bauform eines E-Motors angeschlossen. Der Aktuator umfasst ein Gehäuse 21 mit einem Boden 23, der Befestigungsmittel 25 zum Kopflager aufweist, wobei der obere Federteller 13 mit dem Boden 23 einteilig ausgeführt ist. Aufgrund der gemeinsamen Anbindung des Bodens 23 und der Kolbenstange 5 mit dem Kopflager steht der obere Federteller 13 ortsfest zur Kolbenstange 5.

In dem Gehäuse 21 ist ein ringförmiger Stator 27 angeordnet, der einen Rotor 29 mit einem u-förmigen Querschnitt antreibt. Auf einem axial verlaufenden Schenkel 29a des Rotors 29 ist eine Gewindespindel 31 befestigt, die auf ihrer äußeren Mantelfläche ein Bewegungsgewinde 33 aufweist. In das Bewegungsgewinde 33 greift eine Gewindemutter 35 ein, die über eine Zwischenhülse 37 mit dem zweiten Federteller 15 in Wirkverbindung steht. In Abhängigkeit der Drehbewegung des Rotors und damit der Gewindespindel führt die Gewindemutter eine translatorische axiale Bewegung aus, die von dem zweiten Federteller 15 synchron mit ausgeführt wird, wodurch sich die Gesamttragkraft der beiden Federn 9; 11 einstellen lässt, um z. B. eine Wankbewegung des Fahrzeugaufbaus zu kompensieren.

Ausgehend vom Kopflager 17 erstreckt sich innerhalb der Gewindespindel ein Führungsrohr 39, das an seinem unteren Ende eine Glocke 41 trägt, in der ein Anschlagpuffer 43 eingespannt ist, der ab einer definierten Hublage des Schwingungsdämpfers 3 auf einer oberen Stirnfläche des Zylinders 7 zur Anlage kommt. Das Führungsrohr ist in Axialrichtung und in Umfangsrichtung ortsfest zur Kolbenstange gelagert, da ein Flansch 45 von den Befestigungsmitteln 25 zum Gehäuse des E-Motors durchdrungen wird und in einer topfförmigen Erweiterung 47 die Kolbenstange befestigt ist.

Die Gewindespindel 31 und die Gewindemutter werden bis zum zweiten Federteller 15 von einem elastischen Schutzbalg 49 eingehüllt, der endseitig an der Baueinheit Gewindemutter-Federteller befestigt ist. Das andere Ende setzt Gehäuse 21 des E-Motors an. In der Fig. 1 nehmen der zweite Federteller 15 und damit auch die Gewindemutter 35 eine untere Endstellung ein. Dabei setzt die Gewindemutter 35 mit einem ersten Axialanschlag 51, der bevorzugt von einem Elastomerkörper gebildet wird, auf der Oberseite der Glocke 41 auf. Wie bereits vorstehend beschrieben, führt die Gewindemutter 35 nur eine translatorische Bewegung aus, da die Federn 9; 11 durch ihre Vorspannung ein Mitdrehen mit der Gewindespindel verhindern. Folglich findet auch zwischen dem ersten Axialanschlag 51 und der Glocke keine in Umfangsrichtung wirksame Relativbewegung statt, die eine Verspannung zwischen der Gewindemutter und der Gewindespindel bewirken könnte.

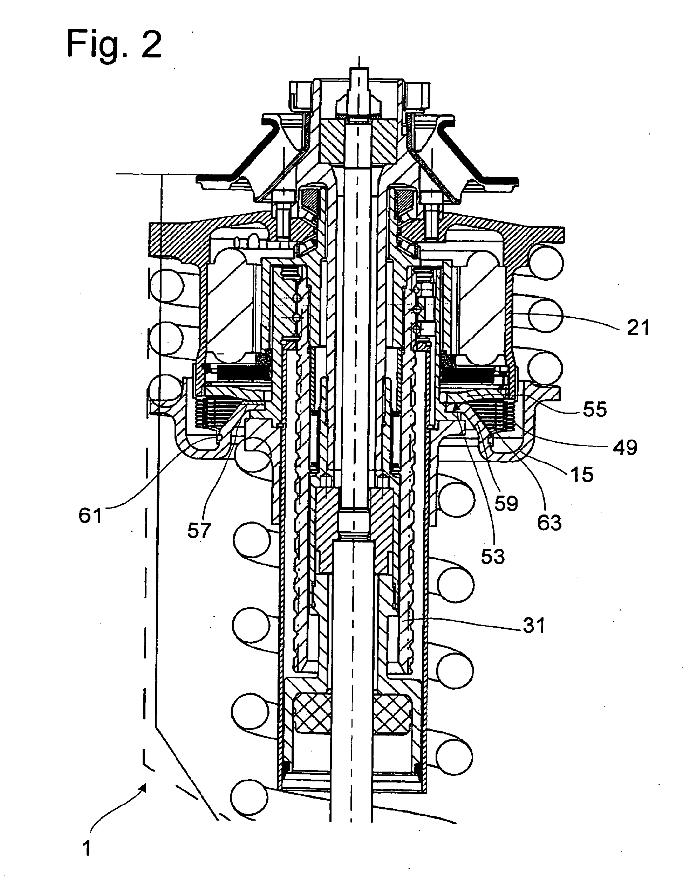

Die Fig. 2 zeigt dasselbe Federbein 1 in einem Betriebszustand, bei dem der zweite Federteller 15 eine obere Endstellung auf der Gewindespindel 31 einnimmt. Dabei kommt der zweite Federteller 15 mit einem zweiten Axialanschlag 53, der bezogen auf den verstellbaren Federteller 15 auf einer Rückseite ausgeführt ist, an einer Prallscheibe 55 als ortsfesten Bauteil des Gehäuses 21 zur Anlage. Der zweite Axialanschlag ist im Bereich des Windungsdurchmessers der zweiten Feder 11 ausgeführt und kann ggf. auch mit einem Elastomerkörper 57 bestückt sein.

Der in der Fig. 1 nahezu gestreckt dargestellte Schutzbalg 49 ist in der Fig. 2 nahezu oder vollständig gestaucht und kann in Abstimmung mit der räumlichen Ausgestaltung des zweiten Axialanschlags 53 als Anschlag dienen. Alternativ kann man vorsehen, dass der Schutzbalg 49 nicht auf Blocklänge gestaucht wird, wobei dann der Schutzbalg 49 dem zweiten Axialanschlag funktional parallel geschaltet ist.

Der zweite Federteller 15 weist dazu einen hülsenförmigen Abschnitt 59 auf, der einerseits den zweiten Axialanschlag 53 und in einem axialen Abstand eine Befestigungsstelle 61 trägt. Die axiale Länge des hülsenförmigen Abstands bestimmt wesentlich die gestauchte Länge des Schutzbalgs 49. Der hülsenförmige Abschnitt 61 verläuft schräg zu dem Schutzbalg 49 und begrenzt mit der Prallscheibe 55 einen Ringraum 63, der die Falten des Schutzbalgs 49 nach radial innen aufnehmen kann.

Auch in der oberen Endstellung kommen mit dem zweiten Axialanschlag 53 und dem ortsfesten Gehäuseteil in Form der Prallscheibe 55 zwei Bauteile ohne eine relative Verdrehbewegung zur Anlage, so dass ebenfalls eine Verspannung innerhalb der Gewindespindel-Gewindemutter auftreten kann.

## Patentansprüche

1. Federbein, umfassend mindestens eine Feder, die zwischen zwei Federtellern angeordnet ist, wobei mindestens einer der beiden Federteller in seiner axialen Position von einem Aktuator verstellbar ist, der eine Gewindespindel antreibt, die über eine Gewindemutter mit dem verstellbaren Federteller in Wirkverbindung steht, wobei mindestens ein Axialanschlag in einer Endstellung des Federtellers wirksam ist,
**dadurch gekennzeichnet,**
**dass** das Gehäuse (21) des Aktuators (19) eine Prallscheibe (55) aufweist, an der der Axialanschlag (53) zur Anlage kommen kann.

2. Federbein nach Anspruch 1,
**dadurch gekennzeichnet,**
**dass** der Axialanschlag (53) bezogen auf den verstellbaren Federteller (11) auf seiner Rückseite ausgeführt ist.

3. Federbein nach Anspruch 1,
**dadurch gekennzeichnet,**
**dass** der Axialanschlag (53) im Bereich des Windungsdurchmessers der Feder (11) ausgeführt ist.

4. Federbein nach Anspruch 1**,**
**dadurch gekennzeichnet,**
**dass** der Axialanschlag (53) mit einem Elastomerkörper ( 57) bestückt ist.

5. Federbein nach Anspruch 1,
**dadurch gekennzeichnet,**
**dass** das Federbein (1) von einem elastischen Schutzbalg (49) eingehüllt wird, der an der Baueinheit Gewindemutter-Federteller (35; 15) endseitig befestigt ist und im gestauchten Zustand einen weiteren Anschlag bildet.

6. Federbein nach Anspruch 5,
**dadurch gekennzeichnet,**
**dass** der als weiterer Anschlag wirkende gestauchte Schutzbalg (49) dem Axialanschlag (53) funktional parallel geschaltet ist.

7. Federbein nach Anspruch 5,
**dadurch gekennzeichnet,**
**dass** der Federteller (15) einen hülsenförmigen Abschnitt (59) aufweist, der einerseits den Axialanschlag (53) trägt und in einem axialen Abstand eine Befestigungsstelle (61) für den Schutzbalg (49) aufweist.

8. Federbein nach Anspruch 7,
**dadurch gekennzeichnet,**
**dass** der hülsenförmige Abschnitt (59) schräg zu dem Schutzbalg (49) verläuft und mit der Prallscheibe (55) einen Ringraum (63) begrenzt, der den gestauchten Schutzbalg (49) aufnehmen kann.

## Claims

1. Spring strut, comprising at least one spring which is arranged between two spring plates, with it being possible for at least one of the two spring plates to be adjusted in terms of its axial position by an actuator which drives a threaded spindle which is operatively connected to the adjustable spring plate via a threaded nut, with at least one axial stop acting in an end position of the spring plate,
**characterized**
**in that** the housing (21) of the actuator (19) has an impact disc (55) with which the axial stop (53) can come into contact.

2. Spring strut according to Claim 1,
**characterized**
**in that** the axial stop (53) is formed, in relation to the adjustable spring plate (11), on the rear side thereof.

3. Spring strut according to Claim 1,
**characterized**
**in that** the axial stop (53) is formed in the region of the coil diameter of the spring (11).

4. Spring strut according to Claim 1,
**characterized**
**in that** the axial stop (53) is equipped with an elastomer body (57).

5. Spring strut according to Claim 1,
**characterized**
**in that** the spring strut (1) is encased by an elastic protective bellows (49) which is fastened at the end side to the structural unit composed of threaded nut and spring plate (35; 15) and which, in the compressed state, forms a further stop.

6. Spring strut according to Claim 5,
**characterized**
**in that** the compressed protective bellows (49) which acts as a further stop is functionally connected in parallel with the axial stop (53).

7. Spring strut according to Claim 5,
**characterized**
**in that** the spring plate (15) has a sleeve-shaped section (59) which firstly bears the axial stop (53) and, spaced apart axially therefrom, has a fastening point (61) for the protective bellows (49).

8. Spring strut according to Claim 7, **characterized in that** the sleeve-shaped section (59) runs obliquely with respect to the protective bellows (49) and, together with the impact disc (55), delimits an annular chamber (63) which can accommodate the compressed protective bellows (49).

## Revendications

1. Jambe de force à ressort comprenant au moins un ressort, qui est disposé entre deux coupelles de ressort, au moins l'une des deux coupelles de ressort pouvant être déplacée dans sa position axiale par un actionneur, qui entraîne une broche filetée qui est en liaison fonctionnelle par le biais d'un écrou fileté avec la coupelle de ressort réglable, au moins une butée axiale agissant dans une position d'extrémité de la coupelle de ressort,
**caractérisée en ce que**
le boîtier (21) de l'actionneur (19) présente un disque d'impact (55) contre lequel la butée axiale (53) peut venir en appui.

2. Jambe de force à ressort selon la revendication 1,
**caractérisée en ce que**
la butée axiale (53) est réalisée par rapport à la coupelle de ressort réglable (11) sur son côté arrière.

3. Jambe de force à ressort selon la revendication 1,
**caractérisée en ce que**
la butée axiale (53) est réalisée dans la région du diamètre d'enroulement du ressort (11).

4. Jambe de force à ressort selon la revendication 1,
**caractérisée en ce que**
la butée axiale (53) est munie d'un corps en élastomère (57).

5. Jambe de force à ressort selon la revendication 1,
**caractérisée en ce que**
la jambe de force à ressort (1) est enveloppée par un soufflet de protection élastique (49), qui est fixé à une extrémité à l'unité constructive constituée de l'écrou fileté et de la coupelle de ressort (35 ; 15) et forme dans l'état comprimé une autre butée.

6. Jambe de force à ressort selon la revendication 5,
**caractérisée en ce que**
le soufflet de protection (49) comprimé agissant comme autre butée est monté fonctionnellement en parallèle avec la butée axiale (53).

7. Jambe de force à ressort selon la revendication 5,
**caractérisée en ce que**
la coupelle de ressort (15) présente une portion en forme de douille (59) qui porte d'une part la butée axiale (53) et qui présente à une distance axiale un point de fixation (61) pour le soufflet de protection (49).

8. Jambe de force à ressort selon la revendication 7,
**caractérisée en ce que**
la portion en forme de douille (59) s'étend obliquement par rapport au soufflet de protection (49) et limite avec le disque d'impact (55) un espace annulaire (63) qui peut recevoir le soufflet de protection comprimé (49).
